# EUROPÄISCHE PATENTANMELDUNG

(11) **EP 0 801 247 A2**
(43) Veröffentlichungstag der Anmeldung: **15.10.1997**
(21) Anmeldenummer: 97104045.6
(22) Anmeldetag: 11.03.1997
(51) Int. Cl.: F16D 69/00

(54) **Reibbelag**

(30) Priorität: 11.04.1996 DE 19614268
(71) Anmelder: Ferodo Beral GmbH, 51709 Marienheide (DE)
(72) Erfinder: Hillig, Bernd, Dipl.-Ing., 51709 Marienheide (DE)

(57) **Zusammenfassung**

Die Erfindung betrifft einen Reibbelag (1) für Bremsen oder Kupplungen, beispielsweise bei Kraftfahrzeugen, bestehend aus einem zum Verschleiß bestimmten Material. Zur Verkürzung der Einlaufzeit beim Bremsen, weist der Reibbelag (1) Erhebungen (3,3',3'') und Vertiefungen (4,4',4'') auf. die Erhebungen (3,3',3'') verkohlen bei Reibanlage, die gebildete Reibkohle erstreckt sich in die Vertiefungen (4,4','').

## Beschreibung

Die Erfindung betrifft einen Reibbelag mit einem definierten Reibungskoeffizienten, bestehend aus zum Verschleiß bestimmten organischen, anorganischen und metallischen Bestandteilen, zur Reibanlage an einer korrespondierenden Fläche aus verschleißfestem Material.

Reibbeläge werden beispielsweise eingesetzt in Bremsen oder Kupplungen von Kraftfahrzeugen. Während der Reibbelag ein aus Kunstharz oder Kunstkautschuk gebundenes Gemisch aus unterschiedlichen Stoffen ist, besteht der Reibpartner aus verschleißfesten Materialien wie metallischen Werkstoffen. Die Reibbeläge erreichen ihren vorgesehenen Reibbeiwert erst, nachdem sie eine gewisse Einlaufzeit in Gebrauch waren. Um die Einlaufzeit zu verkurzen ist es bekannt, die Reibfläche vor dem Einbau in die Bremse oder Kupplung, thermisch zu behandeln. Die DE-OS 3 516 759 A1 offenbart ein Verfahren zum Vorkonditionieren eines Reibbelages um die Anfangsreibung zu erhöhen, wenn der Bremsbelag mit seinem Reibpartner in Anlage gebracht wird.

Mit Hilfe eines Laserstrahles wird die Oberfläche partiell erhitzt, so daß die organischen Bestandteile verkohlen. Es bilden sich somit auf der Oberfläche chemisch veränderte Streifen. Der Nachteil dieses Verfahrens begründet sich in den relativ hohen Herstellkosten, da jeder Reibbelag nach seiner Herstellung einem weiteren Arbeitsgang zugeführt werden muß.

Der Erfindung liegt die Aufgabe zugrunde, einen gattungsgemäßen Reibbelag im Hinblick auf dessen Einlaufzeit zu verbessern, wobei gleichzeitig die Herstellkosten gesenkt werden.

Diese Aufgabe wird erfindungsgemäß durch die kennzeichnenden Merkmale des Patentanspruches 1 gelöst.

Vorteilhafte Ausgestaltungen der Erfindung sind in den Unteransprüchen dokumentiert. Durch das rasterförmige Profil aus Vertiefungen und Erhebungen ist in der Anfangsreibungsphase zunächst eine Reibfläche mit geringer Auflagefläche geschaffen. Da nur die Erhebungen als Reibfläche fungieren, ist eine hohe Flächenpressung gegeben, wodurch beim Bremsen Spitzentemperaturen entstehen, die das Reibmaterial im Bereich der Erhebungen verkohlen lassen. Die gebildete Reibkohle erstreckt sich in die Vertiefungen und es entsteht ein gleichmäßiges Tragbild über den gesamten Reibbelag. Versuche bei Trommelbremsbelägen haben ergeben, daß ohne die Reibbeläge stark zu erhitzen und nur mit wenigen Bremsungen, der Kennwert erreicht wird, der früher nur durch lange Einlaufzeiten und somit starkes Erhitzen der Reibbeläge erreicht wurde. Ein weiterer Vorteil der Erfindung ist darin zu sehen, daß die auf dem Reibbelag angeordneten Vertiefungen und Erhebungen bereits beim Fressen des Reibbelages hergestellt werden können. Das Preßwerkzeug braucht nur mit der entsprechenden Topographie ausgerüstet zu sein. Weitere Arbeitsgänge können entfallen.

Die Erfindung ist anhand eines Ausführungsbeispieles in der Zeichnung dargestellt und wird im folgenden näher erläutert. Es zeigen:
- Figur 1: erfindungsgemäßen Reibbelag in perspektivischer Ansicht
- Figur 2: vergrößerte Darstellung eines Teils der Oberfläche in der Draufsicht
- Figur 3: alternative Ausgestaltung gemäß Figur 2
- Figur 4: weitere Alternative gemäß Figur 2

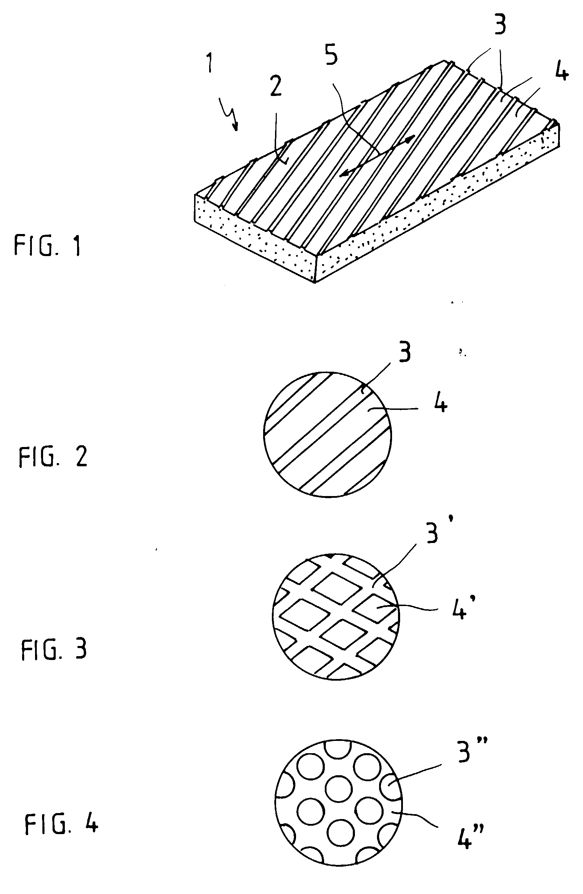

Die Figur 1 zeigt einen Reibbelag (1), beispielsweise wie er für Kraftfahrzeugbremsen angewendet werden kann. Der etwa 5 mm dicke Reibbelag besteht aus organischen, anorganischen und metallischen Materialien, die durch Pressen zu einem Körper geformt sind. Auf der Oberfläche, die als Reibfläche (2) zur Anlage an einem (nicht dargestellten) Reibpartner zur Reibanlage gelangt, sind erfindungsgemäß Erhebungen (3) und Vertiefungen (4) vorgesehen. Im Einlaufvorgang liegen die Erhebungen (3) an dem Reibpartner an. Der Höhenunterschied zwischen Erhebungen (3) und Vertiefungen (4) beträgt weniger als 1 mm. Sobald die Erhebungen (3) mit ihrer geringen Oberfläche in Reibkontakt gelangen, werden diese auf Grund der hohen Flächenpressung sehr stark erhitzt. Durch die Erhitzung tritt ein Verkohlen der Erhebungen (3) ein und die gebildete Reibkohle erstreckt sich in die Vertiefungen (4). Die Erhebungen (3) können wie in Figur 2 vergrößert dargestellt als Stege ausgebildet sein und unter einem Winkel zur Reibrichtung (5) verlaufen. In der Figur (3) ist ein alternatives Profil dargestellt, bei dem die Stege (3') die Vertiefungen (4') umgeben. In der Figur (4) ist eine weitere Variante dargestellt, bei der die Erhebungen als Noppen (3'') ausgebildet sind. Für die Funktion der Erhebungen (3, 3', 3'') ist nicht in erster Linie die geometrische Form maßgebend, so daß auch andere nicht dargestellte Geometrie zur Anwendung gelangen können, vielmehr liegt der Erfindung die Erkenntnis zugrunde, daß nicht wie bei üblichen Reibbelägen die Reibfläche sehr groß sein muß sondern im Gegenteil, eine möglichst kleine Reibfläche vorliegen muß, um einen großen Materialabtrag zu erzeugen. Der erzeugte Materialabtrag wird dann dazu genutzt um ein gleichmäßiges Tragbild auf dem gesamten Reibbelag zu schaffen.

## Patentansprüche

1. Reibbelag mit einem definierten Reibungskoeffizienten, bestehend aus zum Verschleiß bestimmten organischen, anorganischen und metallischen Bestandteilen, zur Reibanlage an eine korrespondierende Fläche aus verschleißfestem Material, dadurch gekennzeichnet, daß der Reibbelag (1) ein rasterförmiges Profil aus Vertiefungen (4, 4', 4'') und Erhebungen (3, 3', 3'') aufweist, derart, daß die Oberfläche der Erhebungen (3, 3', 3'') eine Reibfläche bildet.

2. Reibbelag nach Anspruch 1, dadurch gekennzeichnet, daß die Höhe der Erhebungen (3, 3', 3'') kleiner als 1 mm beträgt.

3. Reibbelag nach Anspruch 1 und 2, dadurch gekennzeichnet, daß die Erhebungen (3, 3') als Stege ausgebildet sind.

4. Reibbelag nach Anspruch 1 bis 3, dadurch gekennzeichnet, daß die Stege (3'') die Vertiefungen (4'') umgeben.

5. Reibbelag nach mindestens einem der Ansprüche 1 bis 4, dadurch gekennzeichnet, daß die Stege (3, 3') in einem Winkel zur Reibrichtung (5) angeordnet sind.

6. Reibbelag nach mindestens einem der Ansprüche 1 bis 5, dadurch gekennzeichnet, daß die Erhebungen (3, 3', 3'') bei Reibanlage verkohlen und die entstehende Reibkohle sich in die Vertiefungen (4, 4', 4'') einlagert.

7. Reibbelag nach mindestens einem der Ansprüche 1 bis 6, dadurch gekennzeichnet, daß die Vertiefungen (4, 4', 4'') und Erhebungen (3, 3', 3'') durch ein spanloses Bearbeitungsverfahren gebildet sind.

8. Reibbelag nach Anspruch 7, dadurch gekennzeichnet, daß die Erhebungen (3, 3', 3'') und Vertiefungen (4, 4', 4'') durch Prägen gebildet sind.

9. Reibbelag nach mindestens einem der Ansprüche 1 bis 6, dadurch gekennzeichnet, daß die Vertiefungen (4, 4', 4'') und Erhebungen (3, 3', 3'') durch ein spanabhebendes Bearbeitungsverfahren gebildet sind.

10. Reibbelag nach Anspruch 9, dadurch gekennzeichnet, daß die Erhebungen (3, 3', 3'') und Vertiefungen (4, 4', 4'') durch Schleifen gebildet sind.
